# EUROPEAN PATENT SPECIFICATION

(11) **EP 2 945 052 B1**
(45) Date of publication and mention of the grant of the patent: **20.12.2017**
(21) Application number: 13870530.6
(22) Date of filing: 21.10.2013
(51) Int. Cl.: G06F 3/16, G01C 21/26, G10L 13/00, G10L 13/02, G10L 15/00, G10L 15/22, G01C 21/36

(54) **VOICE RECOGNITION DEVICE, VOICE RECOGNITION PROGRAM, AND VOICE RECOGNITION METHOD**
SPRACHERKENNUNGSVORRICHTUNG, SPRACHERKENNUNGSPROGRAMM UND SPRACHERKENNUNGSVERFAHREN
DISPOSITIF, PROGRAMME ET PROCÉDÉ DE RECONNAISSANCE VOCALE

(30) Priority: 08.01.2013 JP 2013001373
(43) Date of publication of application: 18.11.2015
(73) Proprietor: Clarion Co., Ltd., Saitama-shi, Saitama 330-0081 (JP)
(72) Inventor: SUGITA, Muneki, Saitama-shi Saitama 330-0081 (JP)
(74) Representative: Strehl Schübel-Hopf & Partner
(86) International application number: PCT/JP2013/078498
(87) International publication number: WO 2014/109104

(56) References cited:
- JP-A- 2001 125 766
- JP-A- 2001 125 766
- JP-A- 2002 311 986
- JP-A- 2005 053 331
- JP-A- 2005 053 331
- US-A1- 2006 224 260
- US-A1- 2007 233 725

## Description

### Technical Field

The present invention relates to a technology for a speech recognition device. The present invention claims priority to Japanese Patent Application No. 2013-1373 filed on January 8, 2013

### Background Art

Hitherto, there has been a technology for an electronic device including: detection means for detecting a state relating to the electronic device; and determination means for determining based on at least a part of the detected state whether or not to start speech recognition or whether or not to end the speech recognition, in which it is determined based on a determination result thereof whether to start or end the speech recognition, the speech recognition is conducted, and the electronic device is caused to conduct a predetermined operation based on a recognition result thereof. In Patent Literature 1, there is disclosed a technology regarding such a device.

In JP 2005-053331 A there is furthermore shown an approach for selection of options from a screen in a vehicle.

US 2006/0224260 A1 discloses an approach where small segments of songs from a music collection are played to a user, one by one.

### Citation List

### Patent Literature

[PTL 1] JP 2003-195891 A

### Summary of Invention

### Technical Problem

With a device as described with PTL 1, even after speech recognition is started, in a case where, for example, a user forgets a name or the like of an instruction target or only remembers the instruction target incorrectly, a voice instruction through utterance may not be appropriate, which may inhibit an intended operation.

. It is an object of the present invention to provide a technology for a speech recognition device having higher convenience.

### Solution to Problem

In order to solve the above-mentioned problems, according to one embodiment of the present invention, there is provided a speech recognition device according to claim 1.

Further, in the speech recognition device, the option reading unit may further conduct, when the option received by the voice instruction reception unit designates a narrowing-down condition for narrowing down the options on a transition destination screen to which a transition is made from the predetermined screen, the voice outputs of the options narrowed down by the narrowing-down condition on the transition destination screen.

Further, in the speech recognition device, the option reading unit may conduct, when the option received by the voice instruction reception unit designates a determination condition for determining a processing target for predetermined processing, the predetermined processing for the processing target identified by the determination condition.

Further, in the speech recognition device, the option reading unit may conduct the voice output by excluding the option that has been displayed among the options on the predetermined screen .

Further, the speech recognition device may further include a history creation unit for updating the number of selected times within the selection history information for the option for which the instruction has been received by the touch instruction reception unit and the voice instruction reception unit.

Further, in the speech recognition device, the speech recognition device may be mounted to a moving object, and the speech recognition device may further include an input reception switching unit for restricting, when the moving object starts moving at a predetermined speed or faster, the reception of the instruction conducted by the touch instruction reception unit.

Further, according to one embodiment of the present invention, there is provided a speech recognition program for causing a computer to execute a speech recognition procedure according to claim 7.

Further, according to one embodiment of the present invention, there is provided a speech recognition method to be performed by a speech recognition device according to claim 8.

### Advantageous Effects of Invention

According to the one embodiment of the present invention, it is possible to provide the technology for the speech recognition device having higher convenience.

### Brief Description of Drawings

FIG. 1 is a schematic configuration diagram of a navigation device.
FIG. 2 is a diagram for showing a configuration of a link table.
FIG. 3 is a diagram for showing a configuration of a screen definition table.
FIG. 4 is a diagram for showing a configuration example of a selection history table.
FIG. 5 is a diagram for illustrating a configuration example of screen transitions.
FIG. 6 is a functional diagram of an arithmetic processing unit of the navigation device.
FIG. 7 is a flowchart for illustrating voice operation handover processing.
FIG. 8 is a diagram for illustrating an output screen example of a touch operation screen displayed when a selection target is a narrowing-down condition.
FIG. 9 is a diagram for illustrating an output screen example of a touch operation disabled screen displayed when the selection target is the narrowing-down condition.
FIG. 10 is a diagram for illustrating an output screen example of the touch operation screen displayed when the selection target is a determination condition.
FIG. 11 is a diagram for illustrating an output screen example of the touch operation disabled screen displayed when the selection target is the determination condition.
FIG. 12 is a diagram for illustrating an output screen example of the touch operation screen displayed when the selection target is the narrowing-down condition.
FIG. 13 is a diagram for illustrating an output screen example of the touch operation disabled screen displayed when the selection target is the narrowing-down condition.
FIG. 14 is a diagram for illustrating an output screen example of the touch operation screen displayed when the selection target is the determination condition.
FIG. 15 is a diagram for illustrating an output screen example of the touch operation disabled screen displayed when the selection target is the determination condition.

### Description of Embodiment

Now, a navigation device 100 according to the present invention is described with reference to the accompanying drawings.

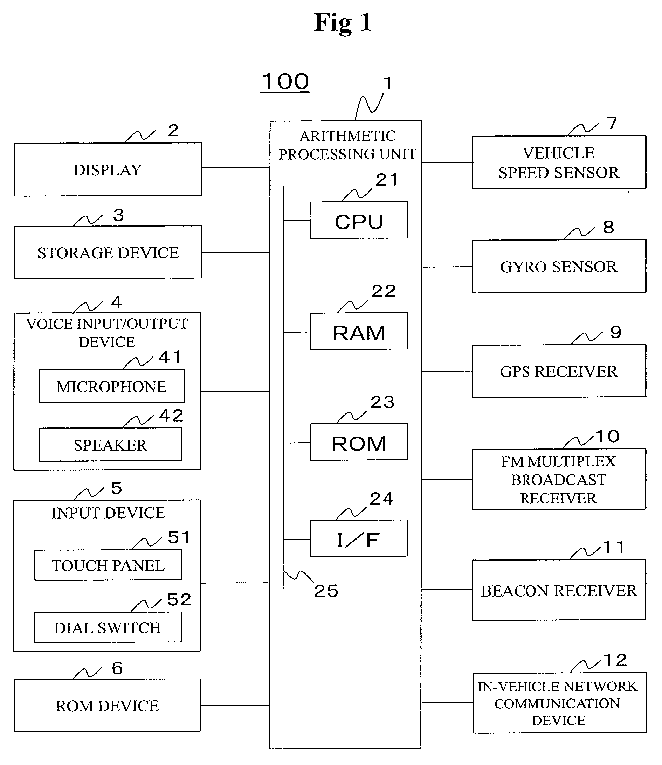

FIG. 1 is an overall configuration diagram of the navigation device 100. The navigation device 100 is a so-called navigation device capable of displaying map information and presenting a spot indicating a present location of the navigation device 100 and information that guides a user along a route to a set destination.

The navigation device 100 includes an arithmetic processing unit 1, a display 2, a storage device 3, a voice input/output device 4 (including a microphone 41 as a voice input device and a speaker 42 as a voice output device), an input device 5, a read only memory (ROM) device 6, a vehicle speed sensor 7, a gyro sensor 8, a global positioning system (GPS) receiver 9, an FM multiplex broadcast receiver 10, a beacon receiver 11, and an in-vehicle network communication device 12.

The arithmetic processing unit 1 is a main unit for conducting various kinds of processing. For example, the arithmetic processing unit 1 calculates the present location based on information output from the respective sensors 7 and 8, the GPS receiver 9, the FM multiplex broadcast receiver 10, and the like. Further, based on information on the obtained present location, map data necessary for display is read from the storage device 3 or the ROM device 6.

Further, the arithmetic processing unit 1 transforms the read map data into graphics, and displays the graphics on the display 2 with the graphics overlaid with a mark indicating the present location. Further, the map data or the like stored in the storage device 3 or the ROM device 6 is used to search for a recommended route that is an optimal route, which connects the present location or a point of departure specified by a user to the destination (or transit point or drop-by point). Further, the speaker 42 or the display 2 is used to guide the user.

In the arithmetic processing unit 1 of the navigation device 100, the respective devices are connected to one another through a bus 25. The arithmetic processing unit 1 includes: a central processing unit (CPU) 21 for executing various kinds of processing such as an numerical value arithmetic operation and control of each device; a random access memory (RAM) 22 for storing the map data read from the storage device 3, arithmetic operation data, and the like; a ROM 23 for storing a program and data; and an interface (I/F) 24 for connection between various kinds of hardware and the arithmetic processing unit 1.

The display 2 is a unit for displaying graphics information generated by the arithmetic processing unit 1 or the like. The display2 is formed of a liquid crystal display, an organic EL display, or the like.

The storage device 3 is formed of a storage medium, which is at least readable and writable, such as a hard disk drive (HDD) or a nonvolatile memory card.

This storage medium stores: a link table 200, which is the map data (including link data on a link forming a road on a map) necessary for a general route search device; a screen definition table 300, which is definition information on a screen displayed on the navigation device 100; and a selection history table 400, which associates the number of times that an option serving as a candidate to be selected on each screen has been actually selected with each option in units of screens. Further, for example, the storage medium of the storage device 3 stores: one, two, or more song files; and information relating to a playlist, which defines identification information identifying a plurality of song files to be played back and a playback order of the song files. Note that, each song file includes, as meta information, attribute information such as information identifying an artist of a song, a composer thereof, a genre thereof, and an album name containing the song.

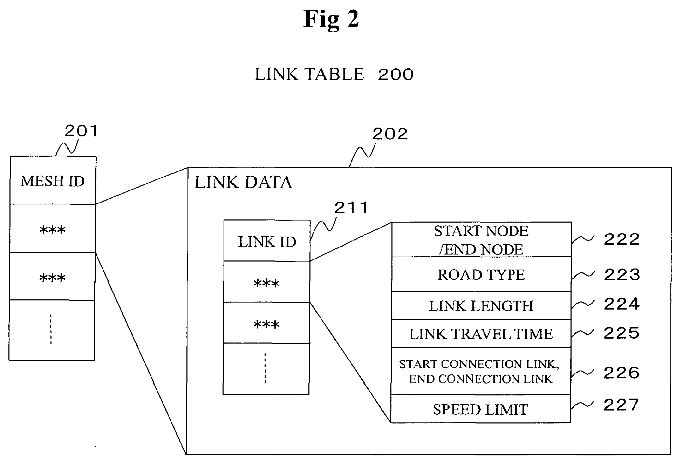

FIG. 2 is a diagram for showing a configuration of the link table 200. For each identification code (mesh ID) 201 of a mesh that is an area segmented on the map, the link table 200 includes link data 202 on each link forming a road included in a mesh area thereof.

For each link ID 211 serving as the identifier of the link, the link data 202 includes coordinate information 222 on two nodes (start node and end node) forming the link, a road type 223 indicating a type of road including the link, a link length 224 indicating a length of the link, a link travel time 225 stored in advance, a start connection link and an end connection link 226, and a speed limit 227 indicating a speed limit of the road including the link. Note that, the start connection link and the end connection link 226 are information identifying a start connection link serving as a link connecting to the start node of the link and an end connection link serving as a link connecting to the end node of the link.

Note that, in this case, in regard to the two nodes forming the link, an upward direction and a downward direction of the same road are managed as mutually different links by distinguishing between the start node and the end node, but the present invention is not limited thereto. For example, the two nodes forming the link may have no distinction between the start node and the end node.

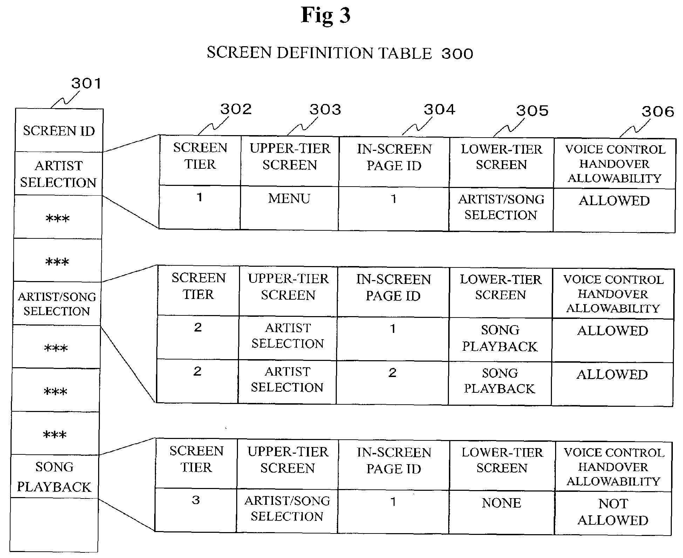

FIG. 3 is a diagram for showing a configuration of the screen definition table 300. The screen definition table 300 includes information in which a screen ID 301, a screen tier 302, an upper-tier screen 303, an in-screen page ID 304, a lower-tier screen 305, and a voice operation handover allowability 306 are associated with one another.

The screen ID 301 is information identifying the screen. The screen tier 302 is information identifying a tier in which the screen identified by the screen ID 301 is positioned within a screen transition system. The upper-tier screen 303 is information identifying a screen in the immediately upper tier with respect to the screen identified by the screen ID 301. The in-screen page ID 304 is information identifying a split page in a case where the screen identified by the screen ID 301 is configured to be displayed by being split into a plurality of pages when the number of options increases. The lower-tier screen 305 is information identifying a screen in the immediately lower tier with respect to the screen identified by the screen ID 301. The voice operation handover allowability 306 is information identifying whether or not the current page is a page for which an input method is handed over to voice operation when a manual operation is no longer received while the screen identified by the screen ID 301 is being displayed.

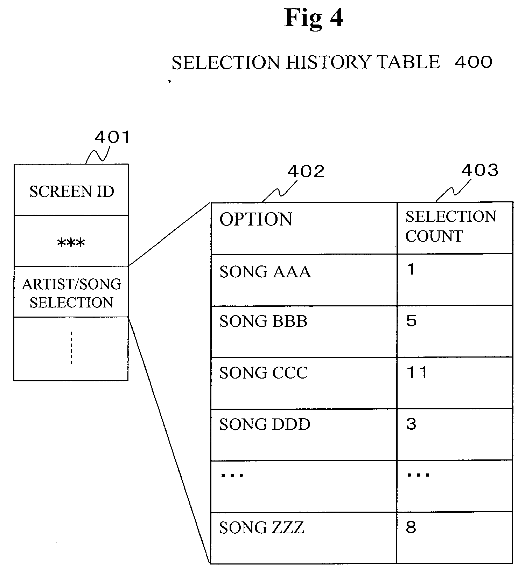

FIG. 4 is a diagram for showing a configuration of the selection history table 400. The selection history table 400 includes information in which a screen ID 401, an option 402, and a selection count 403 are associated with one another.

The screen ID 401 is information identifying the screen. The option 402 is information identifying the option displayed on the screen identified by the screen ID 401. Note that, the option 402 includes a determination condition for finally identifying a target to be operated, for example, information identifying a file name of the song file to be played back or a facility name of a facility to be set as the destination. Further, the option 402 also includes, instead of the determination condition itself, a narrowing-down condition for narrowing down the determination conditions, for example, information identifying the artist of the song file to be played back or a category of the facility to be set as the destination. Further, the option 402 also includes information for receiving the manual operations such as "Back", "OK", and "cancel" buttons.

The selection count 403 is information identifying the number of times that the option 402 has been actually selected. For example, assuming that one of the options has been selected on a given screen five times, information identifying that the number of selected times is "5" is stored in the selection count 403 corresponding to the option.

The description is made referring back to FIG. 1. The voice input/output device 4 includes the microphone 41 as the voice input device and the speaker 42 as the voice output device. The microphone 41 acquires a voice outside the navigation device 100 such as a voice uttered by the user or another vehicle occupant, and receives the voice operation.

The speaker 42 vocally outputs a message for the user generated by the arithmetic processing unit 1. The microphone 41 and the speaker 42 are separately arranged in predetermined sites of a vehicle, but may be received in a single housing. The navigation device 100 can include a plurality of microphones 41 and a plurality of speakers 42.

The input device 5 is a device for receiving an instruction from the user through the manual operation conducted by the user. The input device 5 is formed of a touch panel 51, a dial switch 52, and other hardware switches (not shown) such as a scroll key and a scale change key. Further, the input device 5 includes a remote control capable of remotely instructing the navigation device 100 to conduct an operation. The remote control includes a dial switch, a scroll key, and a scale change key, and can send information indicating that each key or switch is operated to the navigation device 100.

The touch panel 51 is mounted on a display surface side of the display 2, and allows the display screen to be seen therethrough. The touch panel 51 identifies a touched position in which the manual operation is performed, which corresponds to XY coordinates of an image displayed on the display 2, and converts the touched position into coordinates, to output the coordinates. The touch panel 51 is formed of a pressure-sensitive or electrostatic input detection element or the like. Note that, the touch panel 51 may be one that realizes multitouch capable of simultaneously detecting a plurality of touched positions.

The dial switch 52 is configured so as to be able to rotate clockwise and counterclockwise, and generates a pulse signal for each rotation by a predetermined angle, to output the pulse signal to the arithmetic processing unit 1. The arithmetic processing unit 1 obtains a rotation angle from the number of pulse signals.

The ROM device 6 is formed of at least a readable storage medium, for example, a ROM such as a CD-ROM or a DVD-ROM, or an integrated circuit (IC) card. This storage medium stores, for example, video data and audio data.

The vehicle speed sensor 7, the gyro sensor 8, and the GPS receiver 9 are used by the navigation device 100 to detect the present location (for example, location of own vehicle) . The vehicle speed sensor 7 is a sensor for outputting a value used to calculate a vehicle speed. The gyro sensor 8 is formed of, for example, a fibre optic gyroscope or a vibrating structure gyroscope, and detects an angular velocity of a moving object produced by rotation thereof. The GPS receiver 9 receives a signal from a GPS satellite, and measures a distance between the moving object and the GPS satellite and a rate of change in the distance for three or more satellites, to thereby measure the present location, a traveling speed, and a traveling azimuth of the moving object.

The FM multiplex broadcast receiver 10 receives an FM multiplex broadcast signal transmitted from an FM broadcast station. An FM multiplex broadcast includes: vehicle information communication system (VICS: trademark) information including overall current traffic information, regulation information, service area/parking area (SA/PA) information, parking lot information, and weather information; and text information provided by a radio station as FM multiplex general information.

The beacon receiver 11 receives, for example, the VICS information including the overall current traffic information, the regulation information, the service area/parking area (SA/PA) information, the parking lot information, the weather information, and an emergency alarm. For example, the beacon receiver 11 is a receiver such as an optical beacon for communications using light, a radio wave beacon for communications using a radio wave, or the like.

The in-vehicle network communication device 12 is a device for connecting the navigation device 100 to a network compatible with a controller area network (CAN) or other such control network standards for a vehicle (not shown) and conducting communications by exchanging a CAN message with an electronic control unit (ECU) that is another vehicle control device connected to the network.

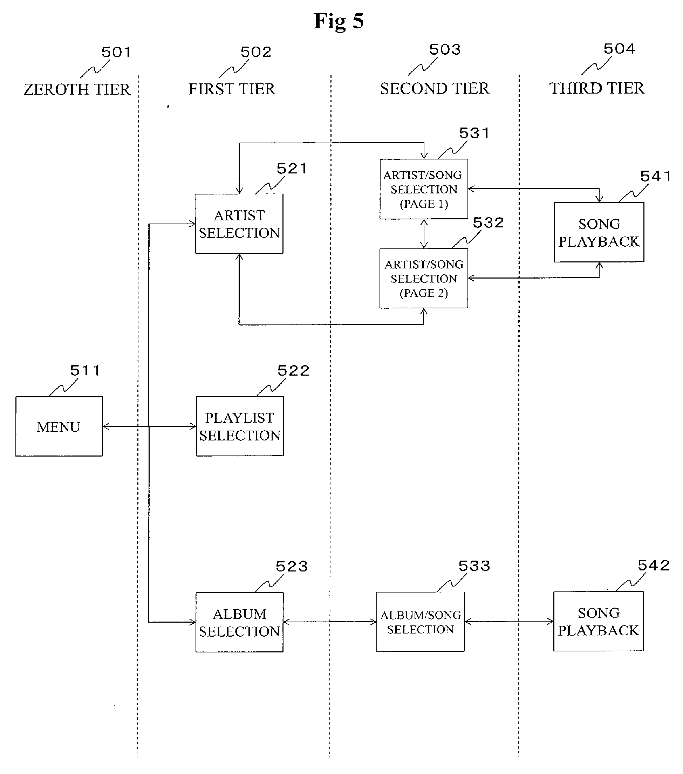

FIG. 5 is a diagram for illustrating a configuration example of screen transitions relating to an operation screen according to this embodiment. In this embodiment, the screen transitions are expressed by a hierarchical structure, and the screen in a deeper tier is designed as a screen serving to input/output more concrete information than the screen in a shallower tier, that is, the upper tier, or as a screen presenting a processing result. However, there is no problem even if the screens having no direct transition relationship are different in degree of concreteness. For example, a song selection screen subjected to narrowing down through the screen for selecting the artist and a song selection screen that is not subjected to narrowing down, which are both screens for selecting a song, may be different in tier for the screen transition. Further, each screen can receive an operation of both the manual operation and the voice operation in a state in which the manual operation is not restricted by an input restriction unit 105, and can receive the voice operation in a state in which the manual operation is restricted by the input restriction unit 105.

As exemplified in FIG. 5, in this embodiment, a menu screen 511 exists in a zeroth tier 501, which is the uppermost tier, and includes, as options, buttons or the like for each receiving an instruction to conduct a transition to any one of an artist selection screen 521, a playlist selection screen 522, and an album selection screen 523 in a first tier 502, which is the lower tier with respect to the menu screen 511.

In this case, the artist selection screen 521 is a screen for receiving an input of the narrowing-down condition for, when the meta information included in a song file stored in the storage device 3 or the ROM device 6 includes information identifying an artist regarding the song, narrowing down songs to songs of the artist in distinction from songs of another artist. Further, the artist selection screen 521 displays an option for identifying the artist involved in performance or the like of the song. Whichever option for the artist is selected, a transition is made to an artist/song selection screen 531 in a second tier 503, which is the lower tier.

Further, the playlist selection screen 522 is a screen for receiving, when the storage device 3 or the ROM device 6 includes playlist information identifying the playback order of the song files stored in the storage device 3 or the like, an input of an instruction to play back songs within the playlist, that is, an input of the determination condition.

The album selection screen 523 is a screen for receiving an input of the narrowing-down condition for, when the meta information included in the song file stored in the storage device 3 or the ROM device 6 includes information identifying an album, narrowing down the songs to songs within the album in distinction from songs within another album. Further, the album selection screen 523 displays an option for specifying an album serving as a unit in which one or a plurality of songs are managed by being grouped in a predetermined order . Whichever option for the album is selected, a transition is made to an album/song selection screen 533 in the second tier 503, which is the lower tier.

The artist/song selection screen 531, which has transitioned from the artist selection screen 521, is a screen for presenting the songs obtained by being narrowed down to the songs of the selected artist in such a manner that allows selection thereof and for receiving an input of the determination condition for specifying the song file. Further, the artist/song selection screen 531 displays an option for specifying the song. Whichever option for the song is selected, a transition is made to a song playback screen 541 in a third tier 504, which is the lower tier. Further, when there are too many options for the songs to be displayed in one screen in the artist/song selection screen 531, an artist/song selection (page 2) 532 is added as a screen for splitting the artist/song selection screen 531 into a plurality of pages to be displayed, and the artist/song selection screen (page 1) 531 and the artist/song selection screen (page 2) are alternately displayed so as to be movable backward and forward. Note that, an operation for changing a display range between the pages may be configured to switch between the pages before and after the change, or the change in the display range may be enabled by continuously changing the options included in the respective pages by an operation such as scrolling.

The album/song selection screen 533, which has transitioned from the album selection screen 523, is a screen for presenting the songs obtained by being narrowed down to the songs of the selected album in such a manner that allows selection thereof and for receiving an input of the determination condition for specifying the song file. Further, the album/song selection screen 533 displays an option for specifying the song. Whichever option for the song is selected, a transition is made to a song playback screen 542 in the third tier 504, which is the lower tier. Note that, in the same manner as the addition to the above-mentioned artist/song selection screens 531 and 532, a page is added to the album/song selection screen 533 when there are too many options for the songs to be displayed in one screen.

The song playback screen 541, which has transitioned from the artist/song selection screen (page 1) 531 or the artist/song selection screen (page 2) 532, is a screen for presenting information relating to the sound file for which the determination condition has been input. For example, the song playback screen 541 displays a moving image or a still image relating to the playback of the song file, displays a length of a played-back part relative to a length of the song by using an indicator, displays an operation panel or the like including as options playback, stop, pause, fast forward, rewind, and output volume adjustment for the song, and conducts other such display.

The song playback screen 542, which has transitioned from the album/song selection screen 533, is a screen for presenting information relating to the sound file for which the determination condition has been input. For example, the song playback screen 542 displays a moving image or a still image relating to the song file, displays a length of a played-back part relative to a length of the song by using an indicator, displays an operation panel or the like including as options playback, stop, pause, fast forward, rewind, and output volume adjustment for the song, and conducts other such display.

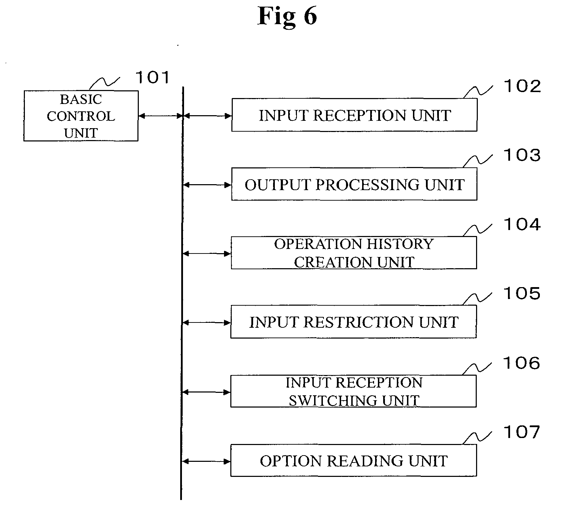

FIG. 6 is a functional diagram of the arithmetic processing unit 1. As illustrated in FIG. 6, the arithmetic processing unit 1 includes a basic control unit 101, an input reception unit 102, an output processing unit 103, an operation history creation unit 104, an input restriction unit 105, an input reception switching unit 106, and an option reading unit 107.

The basic control unit 101 is a main functional unit for conducting various kinds of processing, and controls an operation of another functional unit based on processing contents. Further, information is acquired from the respective sensors, the GPS receiver 9, and the like, and the present location is identified by conducting map matching processing or the like. Further, as the need arises, a traveling history is stored in the storage device 3 for each link by associating a date, time, and location at which traveling has taken place with one another. In addition, a present time is output in response to a request from each processing unit.

Further, the basic control unit 101 searches for the recommended route that is an optimal route, which connects the present location or the point of departure specified by the user to the destination (or transit point or drop-by point) . In the route search, a route search logic such as the Dijkstra's algorithm is used to search for a route that minimizes a link cost based on the link cost set in advance for a predetermined segment (link) of the road.

Further, the basic control unit 101 uses the speaker 42 or the display 2 to guide the user while displaying the recommended route so as to prevent the present location from departing from the recommended route.

The input reception unit 102 receives the manual operation or the voice operation input by the user through the input device 5 or the microphone 41, and transmits, to the basic control unit 101, an instruction to execute processing corresponding to a request content together with sound information and a coordinate position of a touch that is information relating to the voice operation. For example, when the user requests to search for the recommended route, a request instruction thereof is requested from the basic control unit 101. That is, the input reception unit 102 can be regarded as a touch instruction reception unit for receiving the instruction through a manual operation accompanied by touching. Further, the input reception unit 102 can also be regarded as a voice instruction reception unit for receiving the instruction through an operation using a voice (voice operation).

The output processing unit 103 receives information used to form the screen to be displayed such as polygon information, and converts the information into a signal for conducting drawing on the display 2, to instruct the display 2 to conduct the drawing.

The operation history creation unit 104 creates a history of an input of the received narrowing-down condition or determination condition for predetermined processing of the navigation device 100 such as execution of the song file or setting of the destination. Specifically, the operation history creation unit 104 counts the number of times that the execution is carried out (input of selection is instructed) for each option that is the narrowing-down condition or the determination condition the input of which is received at a time of execution (playback) of the song file or at a time of destination setting for the route search, and stored in the storage device 3 as the selection count 403 of the selection history table 400.

The input restriction unit 105 determines that the input is to be restricted in accordance with the state of the vehicle or the like on which the navigation device 100 is mounted. Specifically, the input restriction unit 105 receives an operation with respect to the input reception unit 102 based on both the manual operation through the touch panel 51 or the dial switch 52 and the voice operation through the microphone 41 while the vehicle is stopped, but while the vehicle is traveling at a fixed speed or faster, the input restriction unit 105 determines that the manual operation through the touch panel 51 or the dial switch 52 with respect to the input reception unit 102 is restricted. Further, when a gear for moving the vehicle is selected, that is, for example, when a parking gear is not selected, the input restriction unit 105 determines that the manual operation through the touch panel 51 or the dial switch 52 with respect to the input reception unit 102 is restricted.

In response to the determination of the input restriction unit 105, the input reception switching unit 106 switches the input method by instructing the output processing unit 103 to display a predetermined screen operation disabling message such as "traveling" and instructing the input reception unit 102 to restrict the manual operation through the touch panel 51 or the dial switch 52 and to receive the voice operation through the voice input/output device 4.

When the input method is switched by the input reception switching unit 106, the option reading unit 107 vocally outputs the options on the screen that was displayed at a time point of the switching and the options on the subsequent transition screens through the speaker 42 or the like in an order corresponding to the selected count. In other words, the option reading unit 107 can be regarded as vocally outputting the options on a predetermined screen in the order corresponding to the selected count when the reception of the manual operation is restricted by the input restriction unit 105 on the predetermined screen.

Further, in the processing for vocally outputting the options, the option reading unit 107 sets a voice operation reception period that is a predetermined period for receiving the voice operation for each option, and receives the voice operation through the input reception unit 102 during the period. When a predetermined voice operation (for example, voice operation with a positive meaning such as "hai", "OK", or "yes") is received, the option reading unit 107 assumes that the option corresponding to the voice operation reception period has been selected and input, and identifies the options on a transition destination screen (lower-tier screen or the like), to start reading the identified options and receiving a selection input.

When the predetermined voice operation is not received (for example, when there is no reaction, there is no sound, or a voice operation with a negative meaning such as "iie", "tsugi", "next", or "no" is received), the option reading unit 107 vocally outputs the subsequent options through the speaker 42 or the like, and sets a predetermined voice operation reception period, to receive the voice operation through the input reception unit 102 during the period.

Further, when the option received through the voice operation designates the narrowing-down condition for narrowing down the options on the transition destination screen to which a transition is made from a predetermined screen, the option reading unit 107 further vocally outputs the options narrowed down by the narrowing-down condition on the transition destination screen.

Further, when the option received through the voice operation designates the determination condition for determining a processing target for predetermined processing, the option reading unit 107 conducts predetermined processing for the processing target specified by the determination condition.

Further, the option reading unit 107 conducts a voice output by excluding the option that has been displayed among the options on the predetermined screen.

The respective functional units of the arithmetic processing unit 1 described above, that is, the basic control unit 101, the input reception unit 102, the output processing unit 103, the operation history creation unit 104, the input restriction unit 105, the input reception switching unit 106, and the option reading unit 107 are constructed by the CPU 21 reading and executing a predetermined program. Therefore, the RAM 22 stores the program for implementing the processing of the respective functional units.

Note that, the above-mentioned respective components are obtained by classifying the configuration of the navigation device 100 based on main processing contents in order to facilitate an understanding thereof. Therefore, the present invention is not limited by the classification method of the components and the names thereof. The configuration of the navigation device 100 can be classified into more components based on the processing contents. Alternatively, the configuration can be classified so that one component executes more pieces of processing.

Further, the respective functional units may be constructed by hardware (such as ASIC or GPU). Further, the processing of the respective functional units may be executed by one piece of hardware, or may be executed by a plurality of pieces of hardware.

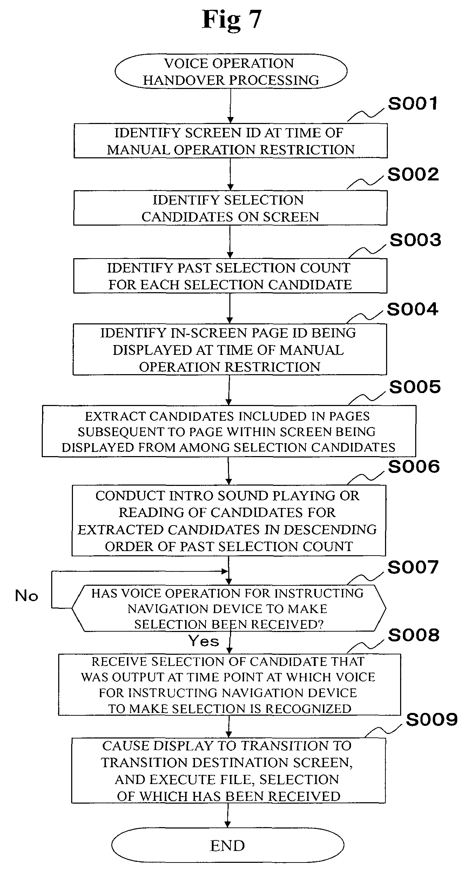

[Description of operation] Now, a description is made of an operation for voice operation handover processing carried out by the navigation device 100. FIG. 7 is a flowchart for illustrating the voice operation handover processing carried out by the navigation device 100. This flow is carried out when the restriction of the manual operation is determined by the input restriction unit 105 in a case where, for example, the vehicle on which the navigation device 100 is mounted starts traveling after the navigation device 100 is started up, and when the input reception switching unit 106 switches the input method from the input method for receiving both the manual operation and the voice operation to the input method for receiving the voice operation with the reception of the manual operation being restricted.

First, the option reading unit 107 identifies the screen ID at a time of operation restriction (Step S001). Specifically, when the screen that was displayed in the state in which the manual operation was restricted by the input restriction unit 105 is the screen display for a predetermined function activated from a menu screen, the option reading unit 107 identifies the screen ID that was displayed for the predetermined function.

Then, the option reading unit 107 identifies selection candidates on the screen (Step S002). Specifically, the option reading unit 107 identifies, as the selection candidates, the options that were displayed in a selectable manner on the screen identified by the screen ID identified in Step S001. Note that, the option reading unit 107 may refer to the voice operation handover allowability 306 regarding the screen, and may finish the operation for the voice operation handover processing when handover is not allowed.

Then, the option reading unit 107 identifies the past selection count for each selection candidate (Step S003). Specifically, the option reading unit 107 reads the selection count 403 associated in the selection history table 400 with each of the options that are the selection candidates identified in Step S002 to identify the selection count.

Then, the option reading unit 107 identifies the in-screen page ID being displayed at the time of operation restriction (Step S004). Specifically, when the operation for changing the display range between the pages was carried out on the screen that was displayed in a situation in which the manual operation was restricted by the input restriction unit 105, the option reading unit 107 identifies the page that has finished being referred to, that is, the page that has been excluded from the display range after being displayed. Note that, the option reading unit 107 identifies the page that has finished being referred to, that is, the options that have been excluded from the display range after being displayed when the operation for changing the display range between the pages was carried out by scrolling of the like on the screen that was displayed in the state in which the input was restricted by the input restriction unit 105.

Then, the option reading unit 107 extracts the candidates included in the pages subsequent to the page within the screen being displayed from among the selection candidates (Step S005). Specifically, the option reading unit 107 extracts the selection candidates by excluding the selection candidates included in the page that has finished being referred to (or the selection candidate excluded from the display range in the case of scrolling), which is identified in Step S004, from among the selection candidates identified in Step S002.

Then, the option reading unit 107 conducts intro sound playing or reading of the candidates for the extracted selection candidates in descending order of the past selection count (Step S006) . Specifically, the option reading unit 107 sorts the selection candidates extracted in Step S005 in descending order of the past selection count identified in Step S003, and conducts the reading of the selection candidates having a large selection count. In the processing for the reading, when the selection candidate is the determination condition, the option reading unit 107 starts a part of the processing executed for the selection candidate when the determination condition is received, and vocally outputs a name or the like of the option when the selection candidate is the narrowing-down condition. For example, in a case where the selection candidate is a song, which corresponds to the determination condition, the option reading unit 107 outputs a sound by playing back the song for a predetermined time period (for example, 3 seconds) from a beginning thereof. Further, for example, in a case where the selection candidate is an artist, which corresponds to the narrowing-down condition, the option reading unit 107 vocally outputs a name of the artist by text-to-speech (TS) or the like.

Then, the option reading unit 107 determines whether or not a voice operation for instructing the navigation device 100 to make a selection has been received (Step S007). Specifically, the option reading unit 107 determines whether or not the voice operation for instructing the navigation device 100 to make a selection with a positive or negative meaning has been received in regard to candidates read in Step S006 through the input reception unit 102. When the voice operation for instructing the navigation device 100 to make a selection is not received, the option reading unit 107 determines repeatedly whether or not the voice operation for instructing the navigation device 100 to make a selection has been received during the predetermined voice operation reception period (for example, after the reading of the option is started and within 2 seconds after the reading of the option is finished) .

When the voice operation for instructing the navigation device 100 to make a selection is received (when "Yes" in Step S007), the option reading unit 107 receives the selection of a candidate that was output at a time point at which a voice for instructing the navigation device 100 to make a selection was recognized (Step S008) . Specifically, when the voice for instructing the navigation device 100 to make a selection has a positive meaning, the option reading unit 107 identifies the option that was read in Step S006, and receives the option as one that has been selected and input. When the voice for instructing the navigation device 100 to make a selection does not have a positive meaning, the option reading unit 107 ignores the voice, and executes processing of Step S006 for the option having the next largest selection count among the options that have not been read yet.

Then, the option reading unit 107 causes the display to transition to the transition destination screen, and executes the file the selection of which has been received (Step S009). Specifically, the option reading unit 107 identifies the lower-tier screen 305 regarding the option that has been selected and input, and executes the file of the option when the option is the determination condition. In other words, when the song is received as the one that has been selected and input, the option reading unit 107 starts the playback of the song. When the option is the narrowing-down condition, the option reading unit 107 identifies the lower-tier screen 305 regarding the option that has been selected and input, and carries out the voice operation handover processing on the assumption that the operation is restricted when the lower-tier screen is displayed.

The processing flow of the voice operation handover processing has been described above. According to the voice operation handover processing, the input through the voice operation can be continued when the restriction of the manual operation is carried out during the manual operation or during the voice operation.

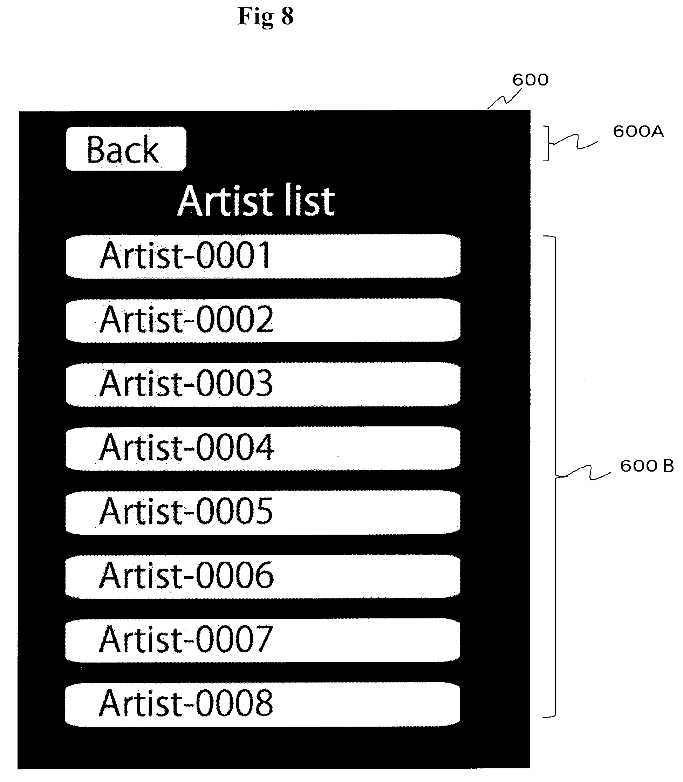

FIG. 8 is a diagram for illustrating an output screen example of a touch operation screen displayed when a selection target is the narrowing-down condition. Specifically, FIG. 8 is a diagram for illustrating an exemplary screen 600 of the artist selection screen 521 that is a screen for receiving the input of artist selection, which is displayed on the navigation device 100.

The exemplary screen 600 includes a back button area 600A for receiving an instruction to return to the upper tier and an artist selection button area 600B for receiving the selection input of the artist, and each of artist names displayed in the artist selection button area 600B corresponds to the option for uniquely receiving the selection input of the artist name.

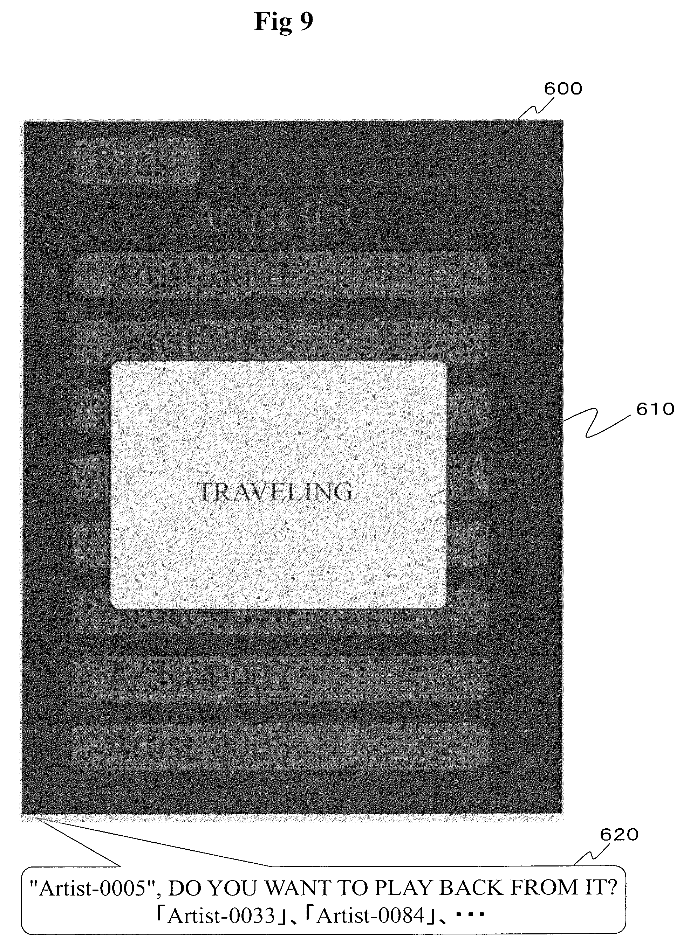

FIG. 9 is a diagram for illustrating an output screen example of the touch operation disabled screen displayed when the selection target is the narrowing-down condition. Specifically, FIG. 9 is a diagram for illustrating the exemplary screen 600 displayed when the restriction of the manual operation is carried out for the artist selection screen 521 that is the screen for receiving the input of the artist selection, which is displayed on the navigation device 100.

On the exemplary screen 600, the back button area 600A, in which the options are displayed under the state of the manual operation being disabled, and the artist selection button area 600B, in which the options are displayed under the state of the manual operation being disabled, are displayed by being grayed out. In addition, the exemplary screen 600 displays a message area 610 indicating that the manual operation is restricted due to the traveling, in which a message of "traveling" is being displayed. When the screen is being displayed, the navigation device 100 is in a state in which the manual operation is not received through the input device 5. Further, a voice guidance 620 is vocally output simultaneously with the display of the screen.

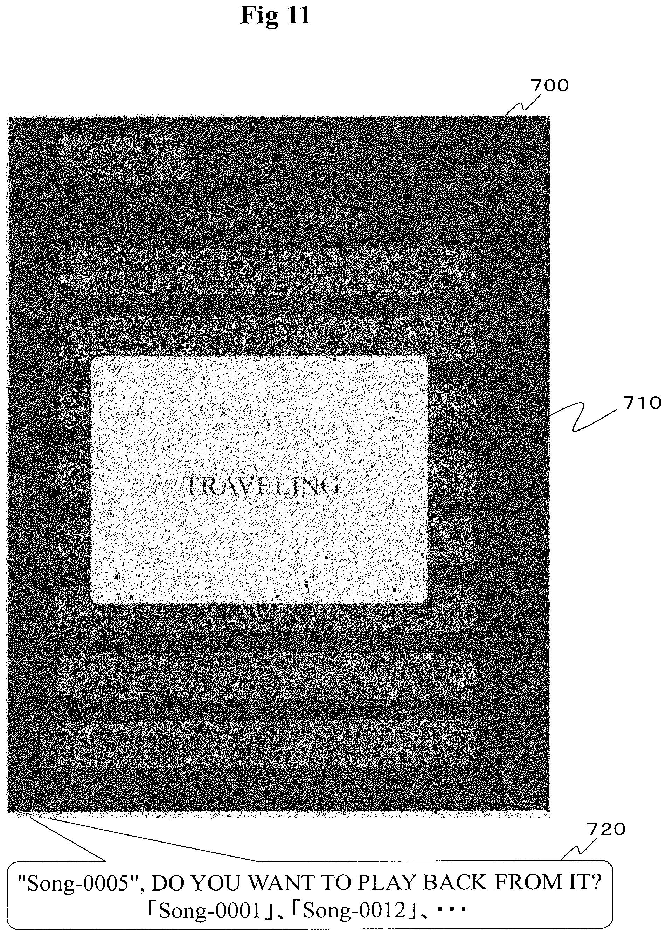

In the voice guidance 620, "Artist-0005", which is the option having the largest selection count, is first read by voice, and then a message of "Do you want to play back from it?" for prompting the user to issue the instruction is read by voice. In this case, when the positive voice operation is conducted, it is assumed that the narrowing-down condition relating to "Artist-0005" has been specified, and the options on the artist/song selection screen 531 that is the next screen for selecting the song relating to the artist is read by voice in the same manner (see FIG. 11). When the positive voice operation is not conducted, "Artist-0033" having the next largest playback count is further read by voice. When the positive voice operation is not conducted, "Artist-0084" having the third largest playback count is read by voice.

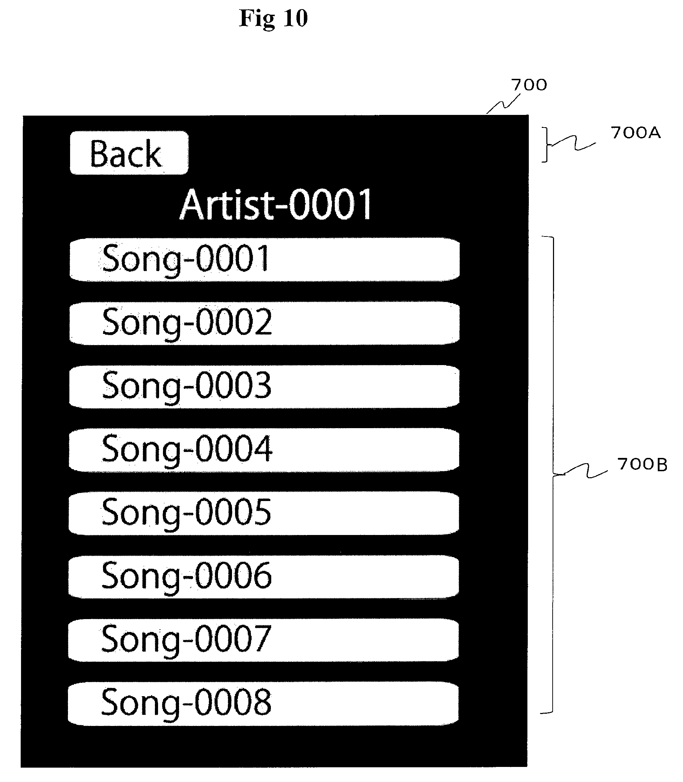

FIG. 10 is a diagram for illustrating an output screen example of a touch operation screen displayed when the selection target is the determination condition. Specifically, FIG. 10 is a diagram for illustrating an exemplary screen 700 of the artist/song selection screen 531 that is a screen for receiving the input of song selection, which is displayed on the navigation device 100.

The exemplary screen 700 includes a back button area 700A for receiving an instruction to return to the upper tier and an artist/song selection button area 700B for receiving the selection input of the song, and each of song names displayed in the artist/song selection button area 700B corresponds to the option for uniquely receiving the selection input of the song.

FIG. 11 is a diagram for illustrating an output screen example of the touch operation disabled screen displayed when the selection target is the narrowing-down condition. Specifically, FIG. 11 is a diagram for illustrating the exemplary screen 700 displayed when the restriction of the manual operation is carried out for the artist/song selection screen 531 that is the screen for receiving the input of the artist/song selection, which is displayed on the navigation device 100.

On the exemplary screen 700, the back button area 700A, in which the options are displayed under the state of the manual operation being disabled, and the artist/song selection button area 700B, in which the options are displayed under the state of the manual operation being disabled, are displayed by being grayed out. In addition, the exemplary screen 700 displays a message area 710 indicating that the manual operation is restricted due to the traveling, in which the message of "traveling" is being displayed. When the screen is being displayed, the navigation device 100 is in a state in which the manual operation is not received through the input device 5. Further, a voice guidance 720 is vocally output simultaneously with the display of the screen.

In the voice guidance 720, the sound in an opening part (for example, 3 seconds of opening or introduction part) of "Song-0005", which is the option having the largest playback count, is first played back (intro playback). At the same time, a song name that is the option is vocally output, and then the message of "Do you want to play back from it?" for prompting the user to issue the instruction is read by voice. In this case, when the positive voice operation is conducted, it is assumed that the determination condition relating to "Song-0005" has been specified, and the song playback screen 541 indicating detailed information at the time of the playback of the song is displayed while the song is played back to output a sound. When the positive voice operation is not conducted, the sound in the opening part of "Song-0001" having the next largest playback count is further played back. When the positive voice operation is not conducted, the sound in the opening part of "Song-0012" having the third largest playback count is played back.

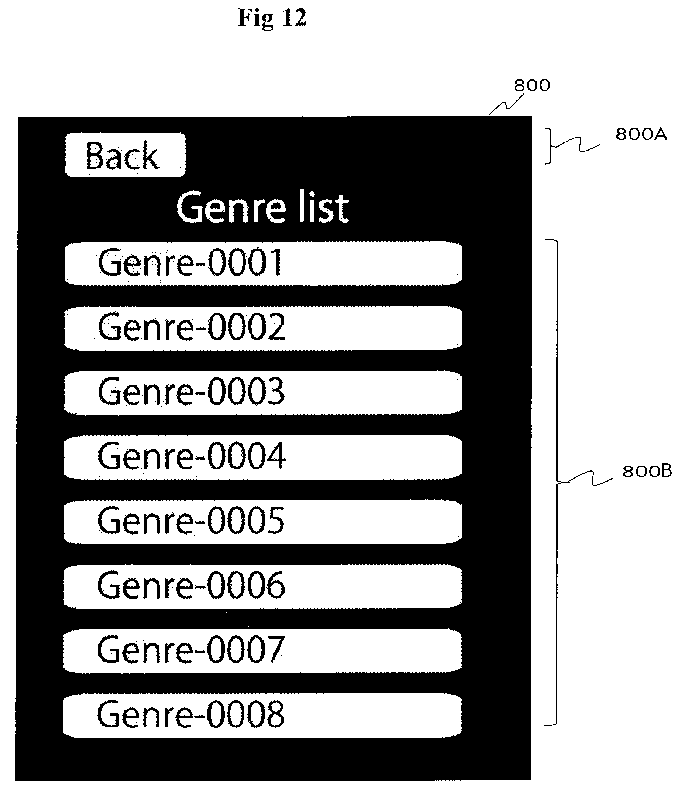

FIG. 12 is a diagram for illustrating another output screen example of the touch operation screen displayed when the selection target is the narrowing-down condition. Specifically, FIG. 12 is a diagram for illustrating an exemplary screen 800 for receiving the input of destination selection, which is displayed on the navigation device 100.

The exemplary screen 800 includes a back button area 800A for receiving an instruction to return to the upper tier and a genre selection button area 800B for receiving the selection input of the genre, and each of genre names displayed in the genre selection button area 800B corresponds to the option for uniquely receiving the selection input of the genre.

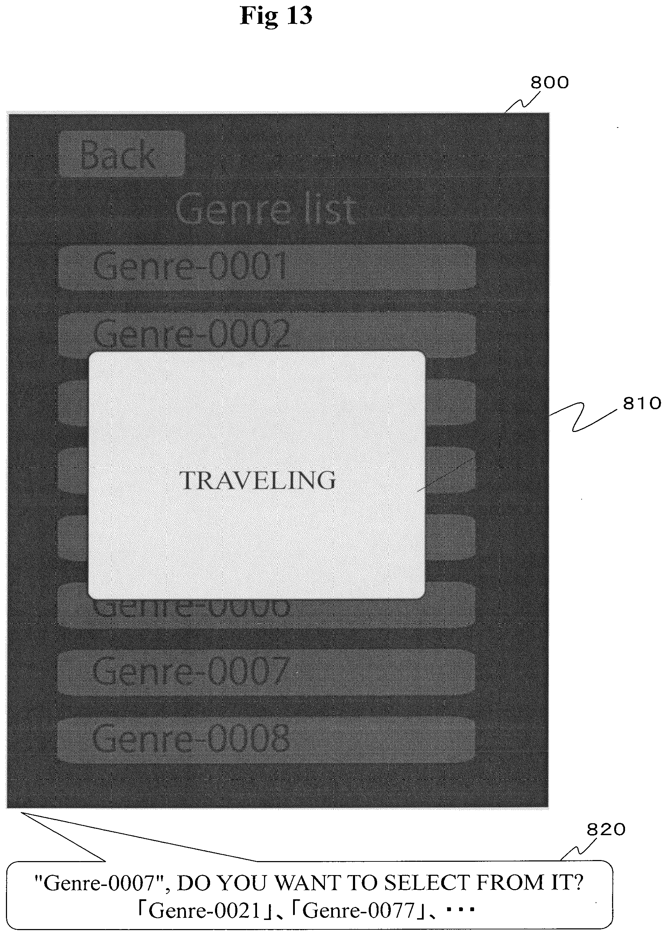

FIG. 13 is a diagram for illustrating another output screen example of the touch operation disabled screen displayed when the selection target is the narrowing-down condition. Specifically, FIG. 13 is a diagram for illustrating the exemplary screen 800 displayed when the restriction of the manual operation is carried out for the genre selection screen that is the screen for receiving the input of the genre selection, which is displayed on the navigation device 100.

On the exemplary screen 800, the back button area 800A, in which the options are displayed under the state of the manual operation being disabled, and the genre selection button area 800B, in which the options are displayed under the state of the manual operation being disabled, are displayed by being grayed out. In addition, the exemplary screen 800 displays a message area 810 indicating that the manual operation is restricted due to the traveling, in which the message of "traveling" is being displayed. When the screen is being displayed, the navigation device 100 is in a state in which the manual operation is not received through the input device 5. Further, a voice guidance 820 is vocally output simultaneously with the display of the screen.

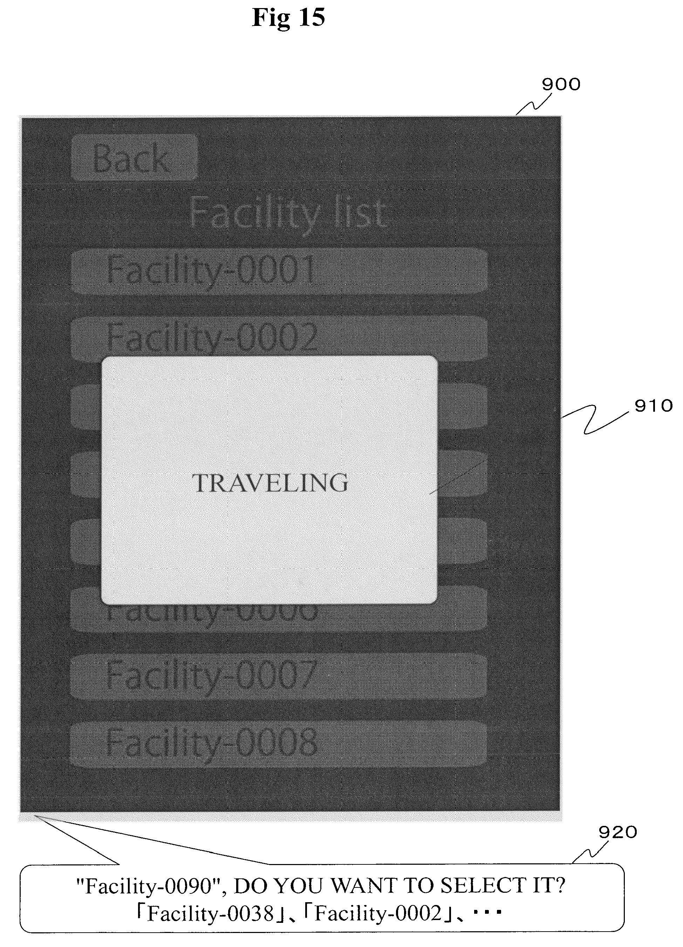

In the voice guidance 820, "Genre-0007", which is the option having the largest selection count is first read by voice, and then the message of "Do you want to select from it?" for prompting the user to issue the instruction is read by voice. In this case, when the positive voice operation is conducted, it is assumed that the narrowing-down condition relating to "Genre-0007" has been specified, and the options on the next screen for selecting the facility relating to the genre is read by voice in the same manner (see FIG. 15) . When the positive voice operation is not conducted, "Genre-0021" having the next largest selection count is further read by voice. When the positive voice operation is not conducted, "Genre-0077" having the third largest selection count is read by voice.

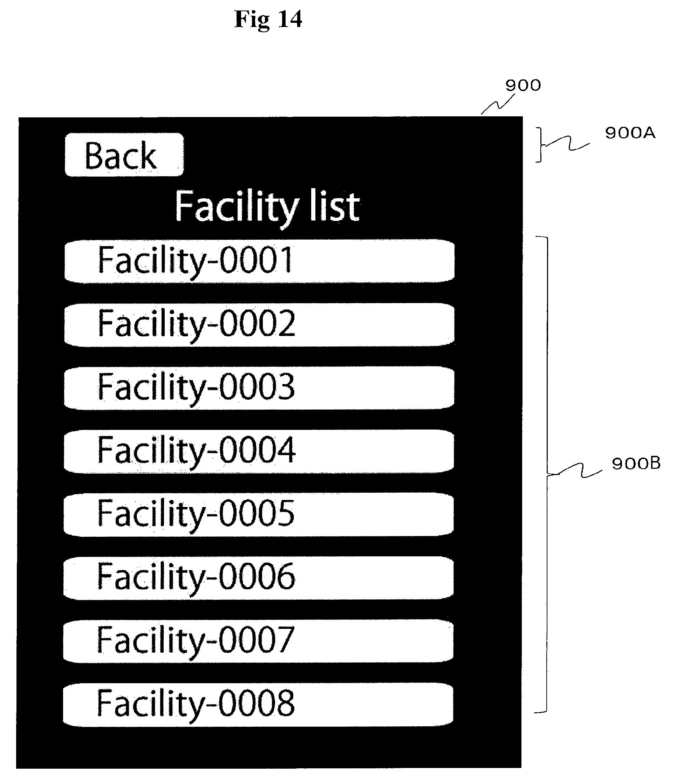

FIG. 14 is a diagram for illustrating an output screen example of the touch operation screen displayed when the selection target is the determination condition. Specifically, FIG. 14 is a diagram for illustrating an exemplary screen 900 for receiving the input of facility selection, which is displayed on the navigation device 100.

The exemplary screen 900 includes a back button area 900A for receiving an instruction to return to the upper tier and a facility selection button area 900B for receiving the selection input of the facility, and each of facility names displayed in the facility selection button area 900B corresponds to the option for uniquely receiving the selection input of the facility.

FIG. 15 is a diagram for illustrating an output screen example of the touch operation disabled screen displayed when the selection target is the determination condition. Specifically, FIG. 15 is a diagram for illustrating the exemplary screen 900 displayed when the restriction of the manual operation is carried out for the facility selection screen that is the screen for receiving the input of the facility selection, which is displayed on the navigation device 100.

On the exemplary screen 900, the back button area 900A, in which the options are displayed under the state of the manual operation being disabled, and the facility selection button area 900B, in which the options are displayed under the state of the manual operation being disabled, are displayed by being grayed out. In addition, the exemplary screen 900 displays a message area 910 indicating that the manual operation is restricted due to the traveling, in which the message of "traveling" is being displayed. When the screen is being displayed, the navigation device 100 is in a state in which the manual operation is not received through the input device 5. Further, a voice guidance 920 is vocally output simultaneously with the display of the screen.

In the voice guidance 920, "Facility-0090", which is the option having the largest selection count is first read by voice, and then the message of "Do you want to select from it?" for prompting the user to issue the instruction is read by voice. In this case, when the positive voice operation is conducted, it is assumed that the determination condition relating to "Facility-0090" has been specified, and a route display screen including the facility as the destination is displayed, to set the route as the recommended route. When the positive voice operation is not conducted, "Facility-0038" having the next largest selection count is further read by voice. When the positive voice operation is not conducted, "Facility-0002" having the third largest selection count is read by voice.

The embodiment of the present invention has been described above. According to the above-mentioned embodiment of the present invention, it is possible to provide the speech recognition device having higher convenience.

The present invention is not limited to the above-mentioned embodiment. Various modifications can be made to the above-mentioned embodiment within the scope defined by the appended claims. For example, in the above-mentioned embodiment, it is assumed that the screen transition is expressed by the hierarchical structure, the screen in the deeper tier is designed as a screen serving to input/output more concrete information than the screen in the shallower tier, that is, the upper tier, or as the screen presenting the processing result, but the present invention is not limited thereto.

For example, when a screen or the like having a large number of input items is included, the input screen may have a structure involving transitions among a plurality of screens. In other words, according to the above-mentioned embodiment, it is conceivable that an appropriate input using a voice is possible even when the screen that has already been subjected to the input operation exists within the transitions.

Further, for example, in the above-mentioned embodiment, when the manual operation is restricted in the selection of the option of the narrowing-down condition, the voice operation is used to receive the input of the option of the narrowing-down condition, but the present invention is not limited thereto. For example, the song may be played back when the input of the voice for identifying the song that is the determination condition is received. Further, when the voice operation of a predetermined reserved word such as "usual" is received, the songs may be narrowed down by the narrowing-down condition that has already been received on the screen before the transition, and the intro playback may be started in descending order of the playback count. With such a modification, it is possible to further increase the convenience.

Further, for example, the selection history table 400 according to the above-mentioned embodiment may be provided in a storage area accessible through the network depending on the user, and the selection count may be acquired from the navigation device 100 through communications. With this configuration, a plurality of navigation devices 100 can share a selection history.

The present invention has been described above mainly with reference to the embodiment. Note that, the above-mentioned embodiment assumes the navigation device 100 that can be mounted to an automobile, but the present invention is not limited thereto, and can be applied to the navigation device for a general moving object or a device for the general moving object.

### Reference Signs List

1 ··· arithmetic processing unit, 2 ··· display, 3 ··· storage device, 4 ··· voice input/output device, 5 ··· input device, 6··· ROM device, 7 ··· vehicle speed sensor, 8 ··· gyro sensor, 9 ··· GPS receiver, 10 ··· FM multiplex broadcast receiver, 11 ··· beacon receiver, 12 ··· in-vehicle network communication device, 21 ··· CPU, 22 ··· RAM, 23 ··· ROM, 24 ··· I/F, 25 ··· bus, 41 ··· microphone, 42 ··· speaker, 51 ··· touch panel, 52 ··· dial switch, 100 ··· navigation device, 101 ··· basic control unit, 102 ··· input reception unit, 103 ··· output processing unit, 104 ··· operation history creation unit, 105 ··· input restriction unit, 106 ··· input reception switching unit, 107 ··· option reading unit, 200 ··· link table, 300 ··· screen definition table, 400 ··· selection history table

## Claims

1. A speech recognition device, comprising:
a storage unit (3) for storing screen definition information (300), in which a screen is associated with an option on the screen, and selection history information (400) identifying a number of selection times for each of the options;
a touch instruction reception unit (51, 102) for receiving an instruction through touching operation;
a voice instruction reception unit (41, 102) for receiving an instruction through an operation using voice; and
an option reading unit (42, 107) for conducting, when reception of the instruction conducted by the touch instruction reception unit is restricted on a predetermined screen, voice output of the options on the predetermined screen in an order corresponding to the number of selection times,
wherein the voice instruction reception unit (41, 102) is adapted to receive an instruction regarding any one of the options output by the option reading unit;
each of the options on the predetermined screen identifies a predetermined song file; and
the option reading unit (42, 107) is adapted to conduct the voice output of the options by playing back, for each song file, at least a part of a song regarding the song file.

2. A speech recognition device according to claim 1, wherein the option reading unit (42, 107) is further adapted to conduct, when the option received by the voice instruction reception unit (41, 102) designates a narrowing-down condition for narrowing down the options on a transition destination screen to which a transition is made from the predetermined screen, the voice output of the options narrowed down by the narrowing-down condition on the transition destination screen.

3. A speech recognition device according to claim 1 or 2, wherein the option reading unit (42, 107) is adapted to conduct, when the option received by the voice instruction reception unit (41, 102) designates a determination condition for determining a processing target for predetermined processing, the predetermined processing for the processing target identified by the determination condition.

4. A speech recognition device according to any one of claims 1 to 3, wherein the option reading unit (42, 107) is adapted to conduct the voice output by excluding an option that has been displayed among the options on the predetermined screen.

5. A speech recognition device according to any one of claims 1 to 4, further comprising a history creation unit (104) for updating the number of selection times within the selection history information (400) for the option for which the instruction has been received by the touch instruction reception unit and the voice instruction reception unit.

6. A speech recognition device according to any one of claims 1 to 5, wherein:
the speech recognition device is mounted to a moving object; and
the speech recognition device further comprises an input reception switching unit (106) for restricting, when the moving object starts moving at a predetermined speed or faster, the reception of the instruction conducted by the touch instruction reception unit (51, 102).

7. A speech recognition program for causing a computer to execute a speech recognition procedure, the speech recognition program further causing the computer to function as:
control means (101);
touch instruction reception means (51, 102) for receiving an instruction through touching operation;
voice instruction reception means (41, 102) for receiving an instruction through an operation using voice; and
storage means (3) for storing screen definition information (300), in which a screen is associated with an option on the screen, and selection history information (400) identifying a number of selection times for each of the options, wherein:
the speech recognition program is further adapted to cause the control means (101) to execute an option reading procedure (S006, 42, 107) of conducting, when reception of the instruction conducted by the touch instruction reception means is restricted on a predetermined screen, voice output of the options on the predetermined screen in an order corresponding to the number of selection times;
the speech recognition program is further adapted to cause the voice instruction reception means (41, 102) to receive an instruction regarding any one of the options output in the option reading procedure;
each of the options on the predetermined screen identifies a predetermined song file; and
the option reading procedure (S006, 42, 107) conducts the voice output of the options by playing back, for each song file, at least a part of a song regarding the song file.

8. A speech recognition method performed by a speech recognition device, comprising:
storing screen definition information (300), in which a screen is associated with an option on the screen, and selection history information (400) identifying a number of selection times for each of the options by a storage unit (3) of the speech recognition device; receiving an instruction through touching operation by a touch instruction reception unit (51, 102) of the speech recognition device; and
receiving an instruction through an operation using voice by a voice instruction reception unit (41, 102) of the speech recognition device, the speech recognition method comprising:
an option reading step (S006) of conducting, by the speech recognition device, when reception of the instruction conducted by the touch instruction reception unit is restricted on a predetermined screen, voice output of the options on the predetermined screen in an order corresponding to the number of selection times; and
a step of receiving (S008), by the voice instruction reception unit (41, 102) of the speech recognition device, an instruction regarding any one of the options output in the option reading step,
wherein each of the options on the predetermined screen identifies a predetermined song file; and
the option reading step (S006) conducts the voice output of the options by playing back, for each song file, at least a part of a song regarding the song file.

## Patentansprüche

1. Spracherkennungsvorrichtung aufweisend:
eine Speichereinheit (3) zum Speichern von BildschirmDefinitionsinformationen (300), in denen ein Bildschirm einer Option auf dem Bildschirm zugeordnet ist, und Auswahlverlaufsinformationen (400), die für jede Option die Anzahl der Auswahl angeben;
eine Berührungsbefehls-Empfangseinheit (51, 102) zum Empfang eines Befehls durch Berührungsbedienung;
eine Sprachbefehls-Empfangseinheit (41, 102) zum Empfang eines Befehls durch eine Bedienung unter Verwendung von Sprache; und
eine Optionsleseeinheit (42, 107) um dann, wenn der von der Berührungsbefehls-Empfangseinheit vorgenommene Empfang eines Befehls auf einem vorgegebenen Bildschirm eingeschränkt ist, eine Sprachausgabe der Optionen auf dem vorgegebenen Bildschirm in einer Reihenfolge vorzunehmen, die der Anzahl der jeweiligen Auswahl entspricht,
wobei die Sprachbefehls-Empfangseinheit (41, 102) eingerichtet ist, einen Befehl für irgendeine der von der Optionsleseeinheit ausgegebenen Optionen zu empfangen;
jede der Optionen auf dem vorgegebenen Bildschirm eine vorgegebene Lieddatei angibt; und
die Optionsleseeinheit (42, 107) eingerichtet ist, die Sprachausgabe der Optionen vorzunehmen, indem für jede Lieddatei mindestens ein Teil eines Lieds für die Lieddatei wiedergegeben wird.

2. Spracherkennungsvorrichtung nach Anspruch 1, wobei die Optionsleseeinheit (42, 107) außerdem eingerichtet ist, dann wenn die von der Sprachbefehls-Empfangseinheit (41, 102) empfangene Option eine einschränkende Bedingung zum Einschränken der Optionen auf einem Wechselzielbildschirm, zu dem vom vorgegebenen Bildschirm aus hin gewechselt wird, bezeichnet, eine Sprachausgabe derjenigen Optionen auf dem Wechselzielbildschirm vorzunehmen, die von der einschränkenden Bedingung eingeschränkt sind.

3. Spracherkennungsvorrichtung nach Anspruch 1 oder 2, wobei die Optionsleseeinheit (32, 107) eingerichtet ist, dann wenn die von der Sprachbefehls-Empfangseinheit (41, 102) empfangene Option eine Bestimmungsbedingung zur Bestimmung eines Prozessziels für einen vorbestimmten Prozess bezeichnet, den vorbestimmten Prozess für das von der Bestimmungsbedingung festgelegte Prozessziel auszuführen.

4. Spracherkennungsvorrichtung nach einem der Ansprüche 1 bis 3, wobei die Optionsleseeinheit (42, 107) eingerichtet ist, die Sprachausgabe vorzunehmen, indem eine Ausnahme für eine Option gemacht wird, die unter den Optionen auf dem vorbestimmten Bildschirm bereits angezeigt wurde.

5. Spracherkennungsvorrichtung nach einem der Ansprüche 1 bis 4, mit einer Verlaufserzeugungseinheit (104), um innerhalb der Auswahlverlaufsinformationen (400) die Anzahl der Auswahl für die Option, für die von der Berührungsbefehls-Empfangseinheit und der Sprachbefehls-Empfangseinheit ein Befehl empfangen wurde, zu aktualisieren.

6. Spracherkennungsvorrichtung nach einem der Ansprüche 1 bis 5, wobei:
die Spracherkennungsvorrichtung auf einem beweglichen Gegenstand angebracht ist; und
die Spracherkennungsvorrichtung außerdem eine Eingabeempfangs-Schalteinheit (106) umfasst, um dann wenn sich der bewegliche Gegenstand mit vorbestimmter Geschwindigkeit oder schneller zu bewegen beginnt, den von der Berührungsbefehls-Empfangseinheit (51, 102) vorgenommenen Empfang eines Befehls einzuschränken.

7. Spracherkennungsprogramm, um einen Computer zu veranlassen, einen Spracherkennungsvorgang auszuführen und als Folgendes zu funktionieren:
eine Steuereinrichtung (101);
eine Berührungsbefehls-Emfangseinrichtung (51, 102) zum Empfang eines Befehls durch Berührungsbedienung;
eine Sprachbefehls-Empfangseinrichtung (41, 102) zum Empfang eines Befehls durch eine Bedienung unter Verwendung von Sprache; und
eine Speichereinrichtung (3) zum Speichern von Bildschirmdefinitionsinformationen (300), in denen ein Bildschirm einer Option auf dem Bildschirm zugeordnet ist, und von Auswahlverlaufsinformationen (400), die für jede der Optionen die Anzahl der Auswahl angeben, wobei:
das Spracherkennungsprogramm außerdem eingerichtet ist, die Steuereinrichtung (101) zu veranlassen,einen Optionsleseprozess (S006, 42, 107) auszuführen, um dann wenn der von der Berührungsbefehls-Empfangseinrichtung vorgenommene Empfang eines Befehls auf einem vorbestimmten Bildschirm eingeschränkt ist, eine Sprachausgabe der Optionen auf dem vorbestimmten Bildschirm in einer Reihenfolge entsprechend der Anzahl der jeweiligen Auswahl vorzunehmen;
das Spracherkennungsprogramm außerdem eingerichtet ist, die Sprachbefehls-Empfangseinrichtung (41, 102) zu veranlassen einen Befehl für irgendeine der im Optionsleseprozess ausgegebenen Optionen zu empfangen;
jede der Optionen auf dem vorbestimmten Bildschirm eine vorbestimmte Lieddatei angibt; und
der Optionsleseprozess (S006, 42, 107) die Sprachausgabe der Optionen vornimmt, indem für jede Lieddatei mindestens ein Teil eines Lieds für die Lieddatei wiedergegeben wird.

8. Spracherkennungsverfahren, das von einer Spracherkennungsvorrichtung ausgeführt wird und Folgendes umfasst:
Speichern von Bildschirmdefinitionsinformationen (300), in denen ein Bildschirm einer Option auf dem Bildschirm zugeordnet ist, und von Auswahlverlaufsinformationen (400), die eine Anzahl für die Auswahl jeder der Optionen angeben, mittels einer Speichereinheit (3) der Spracherkennungsvorrichtung;
Empfangen eines Befehls durch Berührungsbedienung mittels einer Berührungsbedienungs-Empfangseinheit (51, 102) der Spracherkennungsvorrichtung; und
Empfangen eines Befehls durch Bedienung unter Verwendung von Sprache mittels einer Sprachbefehls-Empfangseinheit (41, 102) der Spracherkennungsvorrichtung,
wobei das Spracherkennungsverfahren Folgendes umfasst:
einen Optionsleseschritt (S006), um von der Spracherkennungsvorrichtung dann, wenn der von der Berührungsbefehls-Empfangseinheit vorgenommene Empfang eines Befehls auf einem vorgegebenen Bildschirm eingeschränkt ist, eine Sprachausgabe der Optionen auf dem vorgegebenen Bildschirm in einer Reihenfolge entsprechend der Anzahl der jeweiligen Auswahl vorzunehmen; und
einen Schritt (S008), um mittels der Sprachbefehls-Empfangseinheit (41, 102) der Spracherkennungsvorrichtung einen Befehl für irgendeine der im Optionsleseschritt ausgegebenen Optionen zu empfangen,
wobei jede der Optionen auf dem vorgegebenen Bildschirm eine vorgegebene Lieddatei angibt; und
der Optionsleseschritt (S006) die Sprachausgabe der Optionen vornimmt, indem für jede Lieddatei mindestens ein Teil eines Lieds für die Lieddatei wiedergegeben wird.

## Revendications

1. Dispositif de reconnaissance vocale, comprenant :
une unité de mémorisation (3) pour mémoriser une information de définition d'écran (300), dans laquelle un écran est associé à une option sur l'écran, et une information d'historique de sélection (400) identifiant un nombre d'occurrences de sélection pour chacune des options ;
une unité de réception d'instruction tactile (51, 102) pour recevoir une instruction par l'intermédiaire d'une opération de toucher ;
une unité de réception d'instruction vocale (41, 102) pour recevoir une instruction par l'intermédiaire d'une opération utilisant la voix ; et
une unité de lecture d'options (42, 107) pour produire, lorsque la réception de l'instruction effectuée par l'unité de réception d'instruction tactile est restreinte sur un écran prédéterminé, une sortie vocale des options sur l'écran prédéterminé dans un ordre correspondant au nombre d'occurrences de sélection,
dans lequel l'unité de réception d'instruction vocale (41, 102) est adaptée à la réception d'une instruction concernant l'une quelconque des options délivrées en sortie par l'unité de lecture d'options ;
chacune des options sur l'écran prédéterminé identifie un fichier de chanson prédéterminé ; et
l'unité de lecture d'options (42, 107) est adaptée à la production de la sortie vocale des options par la lecture, pour chaque fichier de chanson, d'au moins une partie d'une chanson associée au fichier de chanson.

2. Dispositif de reconnaissance vocale selon la revendication 1, dans lequel l'unité de lecture d'options (42, 107) est de plus adaptée à la production, lorsque l'option reçue par l'unité de réception d'instruction vocale (41, 102) désigne une condition de réduction pour réduire les options sur un écran de destination de transition vers lequel une transition est effectuée à partir de l'écran prédéterminé, de la sortie vocale des options réduites par la condition de réduction sur l'écran de destination de transition.

3. Dispositif de reconnaissance vocale selon la revendication 1 ou 2, dans lequel l'unité de lecture d'options (42, 107) est adaptée à effectuer, lorsque l'option reçue par l'unité de réception d'instruction vocale (41, 102) désigne une condition de détermination pour déterminer une cible de traitement pour un traitement prédéterminé, le traitement prédéterminé pour la cible de traitement identifiée par la condition de détermination.

4. Dispositif de reconnaissance vocale selon l'une quelconque des revendications 1 à 3, dans lequel l'unité de lecture d'options (42, 107) est adaptée à la production de la sortie vocale par l'exclusion d'une option qui a été affichée parmi les options sur l'écran prédéterminé.

5. Dispositif de reconnaissance vocale selon l'une quelconque des revendications 1 à 4, comprenant de plus une unité de création d'historique (104) pour mettre à jour le nombre d'occurrences de sélection à l'intérieur de l'information d'historique de sélection (400) pour l'option pour laquelle l'instruction a été reçue par l'unité de réception d'instruction tactile et l'unité de réception d'instruction vocale.

6. Dispositif de reconnaissance vocale selon l'une quelconque des revendications 1 à 5, dans lequel :
le dispositif de reconnaissance vocale est monté sur un objet en déplacement ; et
le dispositif de reconnaissance vocale comprend de plus une unité de commutation de réception d'entrée (106) pour restreindre, lorsque l'objet en déplacement commence à se déplacer à une vitesse prédéterminée ou plus rapidement, la réception de l'instruction effectuée par l'unité de réception d'instruction tactile (51, 102).

7. Programme de reconnaissance vocale pour faire exécuter à un ordinateur une procédure de reconnaissance vocale, le programme de reconnaissance vocale faisant de plus fonctionner l'ordinateur en :
moyens de commande (101) ;
moyens de réception d'instruction tactile (51, 102) pour recevoir une instruction par l'intermédiaire d'une opération de toucher ;
moyens de réception d'instruction vocale (41, 102) pour recevoir une instruction par l'intermédiaire d'une opération utilisant la voix ; et
moyens de mémorisation (3) pour mémoriser une information de définition d'écran (300), dans laquelle un écran est associé à une option sur l'écran, et une information d'historique de sélection (400) identifiant un nombre d'occurrences de sélection pour chacune des options, dans lequel :
le programme de reconnaissance vocale est de plus adapté à l'exécution par les moyens de commande (101) d'une procédure de lecture d'options (S006, 42, 107) de production, lorsque la réception de l'instruction effectuée par les moyens de réception d'instruction tactile est restreinte sur un écran prédéterminé, d'une sortie vocale des options sur l'écran prédéterminé dans un ordre correspondant au nombre d'occurrences de sélection ;
le programme de reconnaissance vocale est de plus adapté à la réception par les moyens de réception d'instruction vocale (41, 102) d'une instruction concernant l'une quelconque des options délivrées en sortie dans la procédure de lecture d'options ;
chacune des options sur l'écran prédéterminé identifie un fichier de chanson prédéterminé ; et
la procédure de lecture d'options (S006, 42, 107) produit la sortie vocale des options par la lecture, pour chaque fichier de chanson, d'au moins une partie d'une chanson associée au fichier de chanson.

8. Procédé de reconnaissance vocale exécuté par un dispositif de reconnaissance vocale, comprenant :
la mémorisation d'une information de définition d'écran (300), dans laquelle un écran est associé à une option sur l'écran, et d'une information d'historique de sélection (400) identifiant un nombre d'occurrences de sélection pour chacune des options par une unité de mémorisation (3) du dispositif de reconnaissance vocale ;
la réception d'une instruction par l'intermédiaire d'une opération de toucher par une unité de réception d'instruction tactile (51, 102) du dispositif de reconnaissance vocale ; et
la réception d'une instruction par l'intermédiaire d'une opération utilisant la voix par une unité de réception d'instruction vocale (41, 102) du dispositif de reconnaissance vocale,
le procédé de reconnaissance vocale comprenant :
une étape de lecture d'options (S006) consistant à produire, par le dispositif de reconnaissance vocale, lorsque la réception de l'instruction effectuée par l'unité de réception d'instruction tactile est restreinte sur un écran prédéterminé, une sortie vocale des options sur l'écran prédéterminé dans un ordre correspondant au nombre d'occurrences de sélection ; et
une étape de réception (S008), par l'unité de réception d'instruction vocale (41, 102) du dispositif de reconnaissance vocale, d'une instruction concernant l'une quelconque des options délivrées en sortie dans l'étape de lecture d'options,
dans lequel chacune des options sur l'écran prédéterminé identifie un fichier de chanson prédéterminé ; et
l'étape de lecture d'options (S006) produit la sortie vocale des options par la lecture, pour chaque fichier de chanson, d'au moins une partie d'une chanson associée au fichier de chanson.
